# EUROPÄISCHE PATENTSCHRIFT

(11) **EP 3 617 529 B1**
(45) Veröffentlichungstag und Bekanntmachung des Hinweises auf die Patenterteilung: **26.01.2022**
(21) Anmeldenummer: 19188756.1
(22) Anmeldetag: 29.07.2019
(51) Int. Cl.: F04D 29/54

(54) **LÜFTERZARGE EINES KRAFTFAHRZEUGS**
FAN FRAME OF A MOTOR VEHICLE
BÂTI DE VENTILATEUR D'UN VÉHICULE AUTOMOBILE

(30) Priorität: 30.08.2018 DE 102018214782
(43) Veröffentlichungstag der Anmeldung: 04.03.2020
(73) Patentinhaber: Brose Fahrzeugteile SE & Co. Kommanditgesellschaft, Würzburg, 97076 Würzburg (DE)
(72) Erfinder: SCHÄFER, Tilman, 26188 Edewecht (DE); FINDEISEN, Antje, 26125 Oldenburg (DE)
(74) Vertreter: FDST Patentanwälte

(56) Entgegenhaltungen:
- EP-A1- 0 661 186
- DE-A1- 19 638 518
- US-A1- 2012 321 474
- US-A1- 2015 125 287
- US-A1- 2016 146 222

## Beschreibung

Die Erfindung betrifft eine Lüfterzarge eines Kraftfahrzeugs, die einen Zargenkörper aufweist. Die Erfindung betrifft ferner einen Kühlerlüfter eines Kraftfahrzeugs. Der Kühlerlüfter ist zweckmäßigerweise ein Hauptlüfter.

Kraftfahrzeuge mit einem Verbrennungsmotor weisen während des Betriebs eine beträchtliche Wärmeentwicklung auf. Zum Halten der Betriebstemperatur des Verbrennungsmotors und auch für den Betrieb einer Klimaanlage wird üblicherweise ein flüssiges Kühlmittel eingesetzt, welches wiederum gekühlt werden muss. Dies erfolgt üblicherweise mittels eines von einem Fahrtwind beaufschlagten Kühlernetzes, das im Wärmeaustausch zu dem Kühlmittel steht. Beispielsweise wird das Kühlmittel in Rohre geleitet, die in das Kühlernetz eingearbeitet sind. Da insbesondere bei geringen Fahrzeuggeschwindigkeiten der Fahrtwind zur Kühlung normalerweise nicht ausreicht, ist es bekannt, einen elektrischen Lüfter zu verwenden, mittels dessen der Fahrtwind verstärkt wird.

Hierbei wird der Lüfter in Fahrtrichtung hinter dem Kühlernetz angeordnet. Mit Hilfe eines Lüfterrads des Lüfters wird die Luft durch das Kühlernetz hindurch gesaugt und auf den Verbrennungsmotor geleitet. Dort nimmt die Luft überschüssige Wärme des Verbrennungsmotors auf und transportiert diese ab. Hierbei trifft die Luft im Wesentlichen stumpf auf den Verbrennungsmotor und wird von diesem umgelenkt, beispielsweise um 90°. Infolgedessen treten Verwirbelungen auf, die zu einer Erhöhung eines Strömungswiderstand zum somit zu einer Minderung des Wirkungsgrads führen. Auch erfolgt eine Geräuschentwicklung, die unter Umständen störend ist.

Aus US 2012/0321474 A1 ist ein Kühlerlüfter mit einem Zargenkörper bekannt, bei dem eine Akustik verbessert ist. Zusätzlich zu einer Öffnung, in dem sich ein Lüfterrad befindet, ist eine weitere Öffnung in dem Zargenkörper vorhanden.

In US 2015/0125287 A1 ist ein Kühlerlüfter offenbart. Zwischen einem Kühlergitter und einem Lüfter sind mehrere Finnen zum Leiten von Luft vorhanden. Diese sind gebogen ausgestaltet.

In DE 196 38 518 A1 ist ein Axiallüfter zur Luftförderung durch den Wärmetauscher eines Kraftfahrzeugs gezeigt. Eine Motorhalterung für einen Lüfter ist zwischen dem Wärmetauscher und dem Lüfterrad angeordnet.

In US 2016/0146222 A1 ist ein Gerät zum Bewegen von Luft offenbart. Es ist ein in einem Rohr angeordneter Impeller vorgesehen, der von einem Rand des Rohrs beabstandet ist, um ein Verletzungsrisiko zu verringern.

Aus EP 0 661 186 A1 ist eine Lüfterzarge bekannt. An einem Zargenkörper ist eine Motorhalterung lösbar angebunden, sodass eine Austauschbarkeit zwischen unterschiedlichen Motortypen gegeben ist.

Der Erfindung liegt die Aufgabe zugrunde, eine besonders geeignete Lüfterzarge eines Kraftfahrzeugs und einen besonders geeigneten Kühlerlüfter eines Kraftfahrzeugs anzugeben, wobei insbesondere ein Strömungswiderstand reduziert ist.

Hinsichtlich der Lüfterzarge wird diese Aufgabe durch die Merkmale des Anspruchs 1 und hinsichtlich des Kühlerlüfters durch die Merkmale des Anspruchs 10 erfindungsgemäß gelöst. Vorteilhafte Weiterbildungen und Ausgestaltungen sind Gegenstand der jeweiligen Unteransprüche.

Die Lüfterzarge ist ein Bestandteil eines Kraftfahrzeugs und insbesondere ein Bestandteil eines Kühlerlüfters. Hierbei ist die Lüfterzarge geeignet, insbesondere vorgesehen und eingerichtet, an einem Kühler montiert zu werden. Beispielsweise wird mittels der Lüfterzarge der Kühler zumindest teilweise, geeigneterweise im Wesentlichen vollständig, abgedeckt, wobei insbesondere zumindest Teile der Lüfterzarge an dem Kühler anliegen oder von diesem beabstandet sind. Der Kühlerlüfter und somit auch die Lüfterzarge dienen vorzugsweise dem Kühlen eines Verbrennungsmotors des Kraftfahrzeugs. Geeigneterweise wird mittels des Kühlers eine Kühlflüssigkeit abgekühlt, und/oder mittels der Lüfterzarge wird ein Luftstrom auf den etwaigen Verbrennungsmotor geleitet. Das Kraftfahrzeug ist geeigneterweise landgebunden und beispielsweise ein Personenkraftwagen (Pkw). Alternativ hierzu ist das Kraftfahrzeug ein Nutzkraftwagen, beispielsweise ein Lastkraftwagen (Lkw) oder ein Bus.

Die Lüfterzarge umfasst einen Zargenkörper, der vorzugsweise im Wesentlichen flächig ausgestaltet ist. Geeigneterweise weist der Zargenkörper hierbei in zwei Dimensionen im Vergleich zu der im Wesentlichen senkrecht hierzu verlaufenen Dimension eine vergrößerte Ausdehnung auf, beispielsweise um mehr als das Zehnfache. Die Abmessungen des Zargenkörpers sind vorzugsweise zwischen 1 m x 0,5 m und 0,8 m x 0,5 m. Beispielsweise sind die Ränder des Zargenkörpers gekrümmt, sodass der Zargenkörper im Wesentlichen schalenartig ausgestaltet ist.

Der Zargenkörper weist eine runde Luftdurchlassöffnung (Luftdurchlass, Aussparung) auf. Im Montagezustand ist ein Lüfterrad innerhalb der Luftdurchlassöffnung angeordnet. Insbesondere weist die Luftdurchlassöffnung randseitige Konturen auf, in die im Montagezustand entsprechende Konturen des Lüfterrad eingreifen. Somit ist eine Leckluft reduziert. Der Durchmesser der Luftdurchlassöffnung ist geeigneterweise zwischen 0,2 m und 0,6 m. Mit anderen Worten weist das Lüfterrad vorzugsweise einen Durchmesser auf, der zwischen 0,2 m und 0,6 m ist. Das Lüfterrad ist im Montagezustand zweckmäßigerweise im Wesentlichen parallel zu dem Zargenkörper angeordnet und weist vorzugsweise im Wesentlichen die Abmessungen der Luftdurchlassöffnung auf. Das Lüfterrad wird bei Betrieb insbesondere in eine bestimmte Drehrichtung rotiert. Hierfür der Zargenkörper geeignet, vorzugsweise vorgesehen und eingerichtet.

Zudem umfasst die Lüfterzarge eine Motorhalterung. Die Motorhalterung ist geeignet, insbesondere vorgesehen und eingerichtet, einen Elektromotor zu halten. Mit anderen Worten ist im Montagezustand ein Elektromotor an der Motorhalterung montiert. Der Elektromotor ist beispielsweise bürstenbehafteter Kommutatormotor. Besonders bevorzugt jedoch ist der Elektromotor ein bürstenloser Gleichstrommotor (BLDC). Mittels des Elektromotors ist im Montagezustand das Lüfterrad angetrieben. Somit ist die Rotationsachse des Elektromotors senkrecht zudem Zargenkörper und verläuft geeigneterweise in einer axialen Richtung bezüglich der Luftdurchlassöffnung durch deren im Mittelpunkt, also senkrecht zur Ausdehnung der Luftdurchlassöffnung.

Die Motorhalterung ist oberhalb der Luftdurchlassöffnung angeordnet. Mit anderen Worten ist die Motorhalterung bezüglich der Luftdurchlassöffnung axial versetzt, also senkrecht zur Ausdehnung der Luftdurchlassöffnung und/oder des Zargenkörpers. Bei einer Projektion der Motorhalterung senkrecht zur Ausdehnung des Zargenkörpers und/oder senkrecht zu der Luftdurchlassöffnung auf die Luftdurchlassöffnung wird die Luftdurchlassöffnung zumindest teilweise, vorzugsweise vollständig, mittels der Motorhalterung überdeckt. Geeigneterweise ist hierbei die Projektion der Motorhalterung im Wesentlichen mittig in der Luftdurchlassöffnung angeordnet.

Ferner umfasst die Lüfterzarge eine Strebe, die an einem Befestigungsdom angebunden ist. Die Strebe selbst ist an der Motorhalterung angebunden, beispielsweise angeformt. Somit ist die Motorhalterung mittels der Strebe an dem Befestigungsdom angebunden. Der Befestigungsdom ist an dem Zargenkörper angebunden, vorzugsweise befestigt. Folglich ist die Motorhalterung mittels der Strebe und dem Befestigungsdom an dem Zargenkörper angebunden und auf diese Weise stabilisiert. Der Befestigungsdom ist zumindest teilweise senkrecht zu dem Zargenkörper orientiert und weist folglich einen axialen Verlauf auf. Geeigneterweise ist der Befestigungsdom vollständig senkrecht zu dem Zargenkörper orientiert. Mit anderen Worten ist der Befestigungsdom senkrecht zu der Luftdurchlassöffnung.

Insbesondere wird mittels des Befestigungsdoms die Beabstandung der Motorhalterung von der Luftdurchlassöffnung realisiert. Geeigneterweise befindet sich der Befestigungsdom auf der gleichen Seite des Zargenkörpers wie die Motorhalterung und die Strebe, was eine Konstruktion vereinfacht. Der Befestigungsdom weist bezüglich der Luftdurchlassöffnung ein radial äußeres Ende auf, also insbesondere bezüglich des Mittelpunkts der Luftdurchlassöffnung. Hierbei variiert der Abstand des radial äußeren Endes zu dem Mittelpunkt, insbesondere in tangentialer Richtung bezüglich der Luftdurchlassöffnung. Mit anderen Worten beschreibt das radial äußere Ende des Befestigungsdoms in tangentialer Richtung keine Kreisform, deren Mittelpunkt mit dem Mittelpunkt der Luftdurchlassöffnung zusammenfällt. Somit ist der Abstand des äußeren Endes nicht konstant, und die radial äußere Begrenzung des Befestigungsdoms ist nicht mittels einer kreissektor- bzw. zylindersektorähnlichen Fläche begrenzt, deren Mittelpunkt mit dem Mittelpunkt der Luftdurchlassöffnung zusammenfällt.

Geeigneterweise ist die Motorhalterung und/oder der Befestigungsdom im Montagezustand hinter dem Zargenkörper bezüglich der Luftstromrichtung angeordnet. Im Montagezustand strömt insbesondere bei bewegtem Fahrzeug und/oder angetriebenen Lüfterrad, Luft durch die Luftdurchlassöffnung hindurch.

Aufgrund desvariierenden Abstands des äußeren Endes ist es möglich, mittels des Befestigungsdoms den bei Betrieb durch die Luftdurchlassöffnung hindurch treten Luftstrom zu formen und geeignet zu lenken. Insbesondere wird hierbei zumindest teilweise eine radiale Komponente in den Luftstrom mittels des Befestigungsdoms eingebracht. Hierfür ist der Befestigungsdom geeignet, insbesondere vorgesehen und eingerichtet, und somit geeignet ausgestaltet. Infolgedessen trifft der Luftstrom, der durch die Luftdurchlassöffnung hindurch tritt auch nicht lediglich stumpf auf einen etwaigen dahinter angeordneten Gegenstand. Somit entstehen in dem Luftstrom weniger Verwirbelungen, und mittels des Befestigungsdoms wird zudem ein Abriss einer Luftströmung unterbunden. Folglich ist eine Ausbreitung von Verwirbelungen reduziert, sodass der Strömungswiderstand reduziert ist. Beispielsweise sind der Befestigungsdom, der Zargenkörper, die Motorhalterung und/oder die Streben jeweils separate Bauteile. Besonders bevorzugt jedoch sind die Bauteile aneinander angeformt. Mit anderen Worten ist die Lüfterzarge zweckmäßigerweise einstückig erstellt. Vorzugsweise ist die Lüfterzarge einstückig aus einem Kunststoff erstellt. Bevorzugt sind die einzelnen Komponenten, also der Zargenkörper, die Motorhalterung, die Strebe und der Befestigungsdom urgeformt. Vorzugsweise wird die vollständige Lüfterzarge in einem Kunststoffspritzgussverfahren erstellt. Auf diese Weise ist eine Montage vereinfacht und eine mechanische Integrität erhöht.

Zum Beispiel umfasst der Zargenkörper eine Staudruckklappe. Diese weist eine Klappe auf, die innerhalb einer Öffnung des Zargenkörpers schwenkbar angeordnet ist. Bei einem vergleichsweise hohen Stau(Luft-)druck wird die Klappe geöffnet, sodass ein zusätzlicher Durchtritt von Luft durch den Zargenkörper unabhängig der Luftdurchlassöffnung ermöglicht ist. Somit ist auch bei einem vergleichsweise starken, auf den Zargenkörper auftreffenden Luftstrom, wie dies insbesondere bei einer vergleichsweise hohen Bewegungsgeschwindigkeit des Kraftfahrzeugs der Fall ist, ein vergleichsweise große Luftdurchsatz durch den Zargenkörper möglich. Dabei ist bei einem Stillstand des Kraftfahrzeugs die Luftdurchlassöffnung geöffnet ist, was einen Wirkungsgrad erhöht.

Beispielsweise weist der Befestigungsdom senkrecht zu dessen Erstreckung, also parallel zu dem Zargenkörper und/oder der Luftdurchlassöffnung, einen im Wesentlichen konstanten Querschnitt über dessen Verlauf in axialer Richtung auf. Besonders bevorzugt jedoch ist der Querschnitt entlang dessen Verlauf verändert, wobei der Querschnitt mit zunehmendem Abstand zu dem Zargenkörper zweckmäßigerweise eine verringerte Fläche aufweist. Hierbei ändert sich beispielsweise der Querschnitt oder ist besonders bevorzugt gleichartig jedoch lediglich verkleinert. Aufgrund des sich somit verjüngenden Querschnitts, insbesondere der Skalierung, ist ein verbessertes Leiten des Luftstroms ermöglicht, sodass auch bei einem axialen, von dem Zargenkörper beabstandeten Ende des Befestigungsdoms ein Abreißen des Luftstroms unterbunden ist. Beispielsweise sind an dem Befestigungsdom an dessen radial äußeren Ende Verstärkungsrippen angebunden, die beispielsweise im Wesentlichen radial und/oder tangential verlaufen. Zumindest weisen die Verstärkungsrippen bevorzugt eine zumindest radiale Komponente auf. Geeigneterweise sind die Verstärkungsrippen plättchenförmig ausgestaltet. Mittels der Verstärkungsrippen wird die Position des Befestigungsdoms stabilisiert, was eine Robustheit erhöht.

Zum Beispiel ist die maximale Ausdehnung des Befestigungsdoms senkrecht zu dessen Erstreckung, also parallel zu dem Zargenkörper und/oder der Luftdurchlassöffnung zwischen 0,1 m und 0,01 m. Somit ist ein vergleichsweise kompakter Befestigungsdom realisiert. Alternativ oder in Kombination hierzu ist die maximale Ausdehnung des Befestigungsdoms entlang dessen Erstreckung, also senkrecht zu dem Zargenkörper und/oder der Luftdurchlassöffnung, zwischen 0,03 m und 0,2 m. Der Befestigungsdom weist zweckmäßigerweise bezüglich der Luftdurchlassöffnung einen Verlauf zumindest teilweise in tangentialer Richtung auf. Insbesondere ist die Ausdehnung in tangentialer Richtung zwischen 10 % und 60 % der Ausdehnung des Befestigungsdoms in axialer Richtung, also senkrecht zur Luftdurchlassöffnung. Somit ist der Befestigungsdom vergleichsweise robust.

Beispielsweise variiert zusätzliche der Abstand des bezüglich der Luftdurchlassöffnung bestimmten radial inneren Endes des Befestigungsdoms zu dem Mittelpunkt der Luftdurchlassöffnung. Besonders bevorzugt jedoch ist der Abstand des radial inneren Endes des Befestigungsdoms zu dem Mittelpunkt der Luftdurchlassöffnungen konstant. Mit anderen Worten ist das radial innere Ende des Befestigungsdoms entsprechend eines Kreissegments bzw. Zylindersegments geformt. Auf diese Weise wird der im Wesentlichen geradlinig durch die Luftdurchlassöffnung hindurchtretende Luftstrom vergleichsweise gering verwirbelt. Insbesondere ist hierbei die sich auf dieser Seite befinden Wand des Befestigungsdoms vergleichsweise glatt ausgestaltet, sodass eine Ausbildung von Turbulenzen weiter verringert ist. Vorzugsweise weist das radial innere Ende zu dem Mittelpunkt als Abstand den Radius der Luftdurchlassöffnung auf, sodass der Befestigungsdom mit der Luftdurchlassöffnung fluchtet. Folglich befindet sich dieser vergleichsweise nahe an der Motorhalterung, weswegen eine Baugröße des Zargenkörpers verringert ist. Auch ist eine Stabilität der Motorhalterung erhöht. Zudem erfolgt mit dem radial inneren Ende des Befestigungsdoms ein Leiten des durch die Luftdurchlassöffnung im Wesentlichen geradlinig hin durchtretenden Luftstroms, was eine Effektivität weiter erhöht. Aufgrund des konstanten Abstands ist somit der Querschnitt des Befestigungsdoms parallel zur Luftdurchlassöffnung bezüglich einer tangentialen Geraden nicht symmetrisch. In einer Alternative hierzu ist der Querschnitt beispielsweise symmetrisch, und somit ist der Abstand des radial inneren Endes zu dem Mittelpunkt nicht konstant.

Vorzugsweise umfasst der Befestigungsdom eine Verdickung, die geeigneterweise in radialer Richtung bezüglich der Luftdurchlassöffnung verläuft. Die Verdickung befindet sich beispielsweise zwischen den beiden bezüglich der Luftdurchlassöffnung tangentialen Enden des Befestigungsdoms. Beispielsweise weist der Befestigungsdom senkrecht zur Luftdurchlassöffnung einen Kreissektor als Querschnitt auf, wobei der Mittelpunkt des Kreises von dem Mittelpunkt der Luftdurchlassöffnung in Richtung des Befestigungsdoms verschoben ist. Besonders bevorzugt ist die Verdickung jedoch entgegen einer Drehrichtung des Lüfterrad versetzt, also in tangentialer Richtung. Mittels der Verdickung erfolgt eine Stabilisierung des Befestigungsdoms, sodass eine Robustheit erhöht ist. Aufgrund der Verschiebung entgegen der Drehrichtung ist ein Strömungswiderstand des Befestigungsdoms auf den Luftstrom verringert, und somit werden Verwirbelungen weiter reduziert. Insbesondere ist die größte Ausdehnung des Befestigungsdoms in radialer Richtung entgegen der Drehrichtung des Lüfterrad versetzt. Somit ist ein Abreißen eines den Befestigungsdom im Wesentlichen in tangentialer Richtung umströmenden Luftstroms weiter verringert und somit ein Strömungswiderstand weiter verkleinert.

Vorzugsweise ist das bezüglich der Luftdurchlassöffnung tangentiale und entgegen der Drehrichtung des Lüfterrads versetzte Ende des Befestigungsdoms abgerundet. Somit trifft der Luftstrom, der mittels des Lüfterrads bei Betrieb in eine Rotationsbewegung versetzt wird, auf das abgerundete Ende des Befestigungsdoms, sofern der Luftstrom zusätzlich eine radiale Komponente aufweist, beispielsweise aufgrund von Zentrifugalkräften. Aufgrund des abgerundeten Endes ist ein Strömungswiderstand weiter reduziert. Alternativ oder in Kombination hierzu ist auch das in Drehrichtung versetzte tangentiale Ende des Befestigungsdoms abgerundet. Somit ist es ermöglicht, das Lüfterrad auch in die entgegengesetzte Drehrichtung, also in zwei Drehrichtungen, zu betreiben, wobei auch hier ein Strömungswiderstand reduziert ist. Alternativ hierzu läuft das Ende im Wesentlichen spitz zu. Aufgrund einer derartigen Ausgestaltungsform des Endes ist ein Strömungsabriss nach Umströmen des Befestigungsdoms vermieden, weswegen ein Strömungswiderstand weiter reduziert ist.

Zweckmäßigerweise ist die Begrenzung des Befestigungsdoms in radialer Richtung bezüglich der Luftdurchlassöffnung, insbesondere dessen radial es äußeres Ende, glatt ausgestaltet. Vorzugsweise umfasst der Befestigungsdom in diesem Abschnitt eine im Wesentlichen glatte Oberfläche. Geeigneterweise ist die Fläche konkav ausgestaltet. Mit anderen Worten ist die Fläche zweckmäßigerweise lediglich in eine Richtung gekrümmt. Somit ist ein Strömungswiderstand weiter reduziert und eine Konstruktion vereinfacht. Besonders bevorzugt weist der Querschnitt des Befestigungsdoms parallel zum Zargenkörper ein aerodynamisches Profil auf. Mit anderen Worten ist der Querschnitt im Wesentlichen flügelförmig ausgestaltet. Mittels einer derartigen Wahl ist ein Strömungsabriss sicher verhindert. Der Querschnitt des Befestigungsdoms parallel zum Zargenkörper ist tropfenförmig ausgestaltet. Somit weist der Befestigungsdom einen vergleichsweise geringen c_{w}-Wert auf, und ein Strömungswiderstand ist weiter reduziert.

Beispielsweise ist der Befestigungsdom als Vollteil ausgestaltet. Besonders bevorzugt ist der Befestigungsdom jedoch hohl. Hierbei weist der Befestigungsdom eine Öffnung auf, die insbesondere senkrecht zur Luftdurchlassöffnung verläuft, also in axialer Richtung (Axialrichtung). Die Öffnung ist zweckmäßigerweise sacklochartig ausgestaltet und/oder mittels des Zargenkörpers einseitig verschlossen. Aufgrund einer derartigen Ausgestaltung ist das Gewicht des Befestigungsdoms reduziert, sodass eine Montage vereinfacht ist. Auch sind Materialkosten verringert. Zudem ist es auf diese Weise ermöglicht, auch einen vergleichsweise großen Befestigungsdom, also insbesondere einen mit einem vergleichsweise großen Umfang, zu fertigen, was eine Robustheit erhöht. Aufgrund der Öffnung ist auch eine Fertigung des Befestigungsdoms mit einer konstanten Wanddicke und/oder mit einer Wanddicke ermöglicht, die einen bestimmten Wert nicht überschreitet, beispielsweise 0,5 cm. Somit ist auch eine Fertigung in einem Kunststoffspritzgussverfahren ermöglicht, wobei eine Verformung im Wesentlichen ausgeschlossen werden kann. So wird aufgrund der Luftdurchlassöffnung eine Wanddicke des Befestigungsdoms begrenzt, weswegen der Befestigungsdom in einem normalen Prozess in einem Kunststoffspritzgussverfahren erstellt werden kann, wobei Fertigungstoleranzen vergleichsweise gering gewählt werden können.

Vorzugsweise umfasst die Lüfterzarge einen Rand, der an dem Zargenkörper angebunden, vorzugsweise angeformt und besonders bevorzugt mit diesem einstückig ist. Der Rand umgibt zweckmäßigerweise die Luftdurchlassöffnung umfangsseitig. Geeigneterweise wird mittels des Rands somit die Luftdurchlassöffnung begrenzt. Der Rand ist insbesondere im Wesentlichen hohlzylindrisch ausgestaltet und weist beispielsweise senkrecht zum Zargenkörper, also in axialer Richtung, eine Ausdehnung zwischen 0,01 m und 0,05 cm auf. Mittels des Rands wird der Luftstrom vergleichsweise effektiv bei Betrieb durch die Luftdurchlassöffnung hindurch geleitet. Auch ist mittels des Rands sichergestellt, dass der Luftstrom tatsächlich das Lüfterrad passiert, und eine Ausbildung von Leckluft ist reduziert. Geeigneterweise ist der Rand konzentrisch zur Luftdurchlassöffnung und/oder dem etwaigen Lüfterrad angeordnet. Zweckmäßigerweise geht der Rand in den Befestigungsdom über. Somit stabilisieren sich der Befestigungsdom und der Rand gegenseitig, was eine Robustheit der Lüfterzarge erhöht. Auch ist auf diese Weise ein Bauraum reduziert. Zweckmäßigerweise bildete der Rand zumindest teilweise das radial innere Ende des Befestigungsdoms.

Die Strebe weist zum Beispiel zumindest teilweise einen radial Verlauf bezüglich der Luftdurchlassöffnung auf. Besonders bevorzugt jedoch ist die Strebe streng radial angeordnet und liegt somit in einer Ebene, die senkrecht zur Ausdehnung der Luftdurchlassöffnung ist und durch den Mittelpunkt der Luftdurchlassöffnung hindurch reicht. Somit weist die Strebe eine vergleichsweise kurze Länge auf, weswegen ein Gewicht verringert ist. Auch ist auf diese Weise eine Steifigkeit der Strebe erhöht, sodass eine Robustheit der Lüfterzarge vergrößert ist. Hierbei weist die Strebe in radialer Richtung zum Beispiel die größte Ausdehnung auf. Insbesondere ist die Ausdehnung in diese Richtung größer als das Doppelte, Vierfache oder Zehnfache der Ausdehnung in den anderen Richtungen.

Besonders bevorzugt ist die Strebe bezüglich des Zargenkörpers geneigt. Somit weist die Strebe in axialer Richtung und/oder tangentialer Richtung zumindest eine Komponente auf, wenn auch die Ausdehnung der Strebe in diesen Richtungen zweckmäßigerweise im Vergleich zur radialen Ausdehnung verringert ist. Somit schließt die Strebe bezüglich des Zargenkörpers und somit auch bezüglich des Befestigungsdoms einen Winkel ein. Insbesondere ist der Winkel zwischen 30° und 75°. Beispielsweise ist der Winkel zwischen 40° und 50°. Aufgrund der Neigung wird mittels der Strebe der Luftstrom, der durch die Luftdurchlassöffnung hindurch tritt, zusätzlich geleitet, und die Strebe weist einen geringeren Strömungswiderstand auf. Vorzugsweise weist die Strebe ein Profil auf, insbesondere senkrecht zu deren Verlauf. Das Profil ist besonders bevorzugt ein aerodynamisches Profil und/oder tropfenförmig ausgestaltet. Somit ist ein Strömungswiderstand weiter verringert und eine Ausbildung von turbulenten Strömungen vermieden. Infolgedessen ist ein Wirkungsgrad weiter erhöht. Die Neigung der Strebe ist vorzugsweise abhängig vom Einbaufall und der zu fördernden Luftmenge.

Vorzugsweise umfasst die Lüfterzarge weitere Streben und weitere Befestigungsdome. Hierbei dienen sämtliche Streben und Befestigungsdome der Anbindung der Motorhalterung an dem Zargenkörper. Dabei sind sämtliche Streben an der Motorhalterung angebunden, zweckmäßigerweise endseitig. Vorzugsweise sind genauso viele Befestigungsdome wie Streben vorhanden, und diese sind sich somit geeigneterweise zugeordnet. Vorzugsweise sind sämtliche Befestigungsdome und/oder Streben baugleich zueinander ausgestaltet, was eine Fertigung vereinfacht. Insbesondere sind die Streben und/oder Befestigungsdome drehsymmetrisch bezüglich des Mittelpunkts der Luftdurchlassöffnung angeordnet. Zum Beispiel weist die Lüfterzarge zwischen zwei und vierzehn derartige Streben bzw. Befestigungsdome auf. Vorzugsweise umfasst somit die Lüfterzarge insgesamt zwischen drei und fünfzehn derartige Streben bzw. Befestigungsdome.

Der Kühlerlüfter ist ein Bestandteil eines Kraftfahrzeugs und dient zweckmäßigerweise dem Kühlen eines Verbrennungsmotors. Mit anderen Worten ist der Kühlerlüfter ein Hauptlüfter. Alternativ hierzu ist der Kühlerlüfter beispielsweise ein Bestandteil einer Klimaanlage oder eines Nebenaggregats des Kraftfahrzeugs. Der Kühlerlüfter umfasst einen Kühler, der insbesondere ein Kühlernetz aufweist, durch das vorzugsweise eine Anzahl an Rohren geführt ist. Das Kühlernetz ist hierbei zweckmäßigerweise thermisch mit den Rohren kontaktiert. Innerhalb der Rohre wird bei Betrieb bevorzugt eine Kühlflüssigkeit geleitet. Das Kühlernetz ist beispielsweise im Wesentlichen quaderförmig ausgestaltet. Zudem umfasst der Kühlerlüfter eine Lüfterzarge mit einem Zargenkörper, der eine runde Luftdurchlassöffnung für ein Lüfterrad aufweist. Ferner umfasst die Lüfterzarge eine Motorhalterung, die oberhalb der Luftdurchlassöffnung angeordnet und mittels einer Strebe, zweckmäßigerweise mehreren Streben, an einem Befestigungsdom angebunden ist. Der Befestigungsdom ist an dem Zargenkörper angebunden und senkrecht zu diesem orientiert. Das bezüglich der Luftdurchlassöffnung radial äußere Ende des Befestigungsdoms weist einen variierenden Abstand zu dem Mittelpunkt der Luftdurchlassöffnung auf.

Die Lüfterzarge ist an in dem Kühler angebunden, zweckmäßigerweise befestigt. Beispielsweise ist die Lüfterzarge an den Kühler geschraubt oder mit diesem verklebt. Insbesondere überdeckte die Lüfterzarge das etwaige Kühlernetz. Mit anderen Worten ist die Lüfterzarge deckungsgleich zu dem Kühlernetz oder beispielsweise dem vollständigen Kühler. Somit ist ein Durchtritt von Luft zwischen dem Kühler und der Lüfterzarge unterbunden, und mittels der Lüfterzarge erfolgt folglich ein vergleichsweise effizientes Führen der Luft. Die Lüfterzarge ist vorzugsweise abstromseitig des Kühlers angeordnet, also zweckmäßigerweise in Fahrtrichtung des Kraftfahrzeugs hinter dem Kühler. Geeigneterweise erstreckt sich hierbei der Befestigungsdom von dem Kühler weg.

Vorzugsweise umfasst der Kühlerlüfter einen Elektromotor, der mittels der Motorhalterung gehalten ist. Der Elektromotor ist beispielsweise ein bürstenbehafteter Kommutatormotor. Besonders bevorzugt jedoch ist der Elektromotor ein bürstenloser Gleichstrommotor. Hierbei ist eine Rotationsachse des Elektromotors senkrecht zur Luftdurchlassöffnung angeordnet und verläuft insbesondere auf einer axialen Geraden, die durch den Mittelpunkt der Luftdurchlassöffnung reicht. Beispielsweise ist der Elektromotor mit der Motorhalterung verklebt oder verschraubt. Somit ist der Elektromotor vergleichsweise sicher an der Motorhalterung gehalten.

Zudem umfasste der Kühlerlüfter geeigneterweise ein Lüfterrad, das in der Luftdurchlassöffnung angeordnet ist. Vorzugsweise ist das Lüfterrad parallel zur Luftdurchlassöffnung angeordnet und liegt zweckmäßigerweise in einer Ebene mit dem Zargenkörper. Das Lüfterrad ist mittels des Elektromotors angetrieben und vorzugsweise an diesem angebunden, beispielsweise an einer Welle des Elektromotors. Zum Beispiel weist das Lüfterrad eine Nabe auf, die mechanisch direkt mit dem Elektromotor gekoppelt ist. An der Nabe ist vorzugsweise eine Anzahl an Lüfterradflügeln angebunden, die insbesondere einen radialen und beispielsweise zumindest teilweise tangentialen Verlauf aufweisen. Zum Beispiel umfasst das Lüfterrad zusätzlich einen Außenring, an dem die Lüfterradflügel an deren radialen Ende angebunden sind. Mittels des Außenrings erfolgt hierbei eine Stabilisierung der Lüfterradflügel, was einen akustischen Eindruck verbessert. Insbesondere greift der Außenring in eine entsprechende Aufnahme oder Kontur des Zargenkörpers ein, wobei diese bevorzugt zueinander beabstandet sind. Insbesondere ist zwischen diesen eine Labyrinthdichtung gebildet. Somit ist eine Ausbreitung von Leckluft unterbunden. Alternativ oder in Kombination hierzu ist zwischen dem etwaigen Außenring und dem Zargenkörper eine Bürstendichtung oder dergleichen angeordnet. Vorzugsweise ist der Rand der Lüfterzarge vorhanden, der an dem Zargenkörper angebunden ist. Mittels des Rands wird vorzugsweise der Außenring umgeben. Hierbei ist aufgrund des Rands eine Ausbildung einer Dichtung zwischen diesen vereinfacht.

Die im Zusammenhang mit der Lüfterzarge genannten Vorteile und Weiterbildungen sind sinngemäß auch auf den Kühlerlüfter zu übertragen und umgekehrt.

Nachfolgend wird ein Ausführungsbeispiel der Erfindung anhand einer Zeichnung näher erläutert. Darin zeigen:
- Fig. 1: schematisch ein landgebundenes Kraftfahrzeug mit einem Kühlerlüfter,
- Fig. 2: schematisch vereinfacht in einer Explosion Darstellung teilweise den Kühlerlüfter mit einer Lüfterzarge, und
- Fig. 3: perspektivisch ausschnittsweise die Lüfterzarge.

Einander entsprechende Teile sind in allen Figuren mit den gleichen Bezugszeichen versehen.

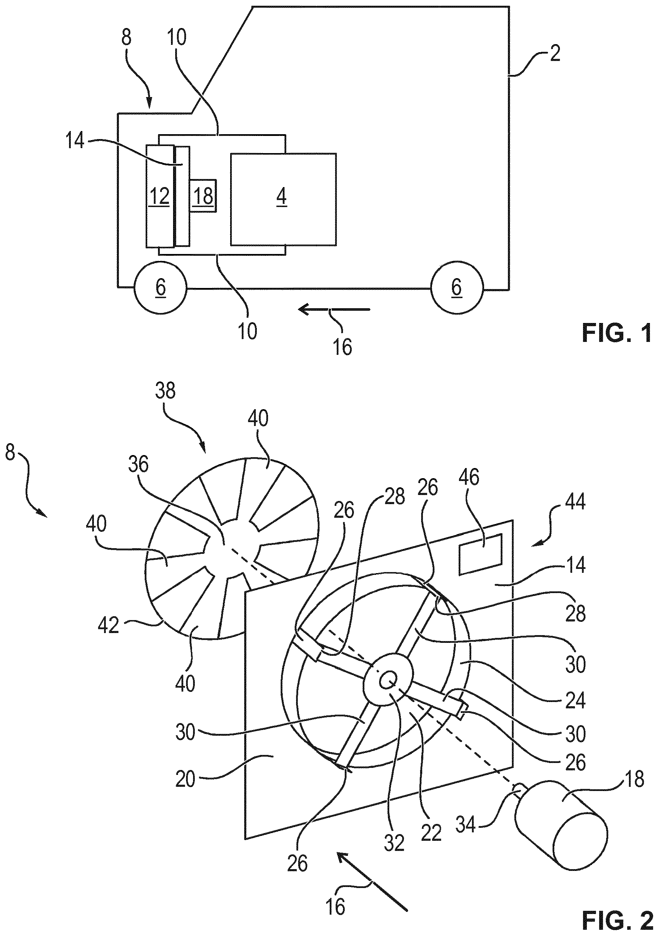

In Figur 1 ist schematisch vereinfacht ein Kraftfahrzeug 2 mit einem Verbrennungsmotor 4 gezeigt. Mittels des Verbrennungsmotors 4 erfolgt ein Antrieb des Kraftfahrzeugs 2. Hierfür steht der Verbrennungsmotor 4 mittels eines nicht näher dargestellten Antriebsstrangs in Wirkverbindung mit mindestens einem der vier Räder 6 des Kraftfahrzeugs 2. Zudem umfasst das Kraftfahrzeug 2 einen Kühlerlüfter 8, der der Kühlung des Verbrennungsmotors 4 dient. Somit ist der Kühlerlüfter 8 ein Hauptlüfter des Kraftfahrzeugs 2. Der Kühlerlüfter 8 ist mittels einer Anzahl an Leitungen 10 mit dem Verbrennungsmotor 4 fluidtechnisch verbunden, durch die bei Betrieb eine Kühlflüssigkeit von dem Kühlerlüfter 8 zu dem Verbrennungsmotor 4 und durch Kühlkanäle dort geleitet wird. Mittels der Kühlflüssigkeit wird überschüssige Wärme aufgenommen und zurück zu dem Kühlerlüfter 8 geführt, mittels dessen eine Abkühlung der Kühlflüssigkeit erfolgt.

Der Kühlerlüfter 8 weist einen Kühler 12 mit einem nicht näher dargestellten Kühlernetz auf, durch das eine Anzahl von Rohren geführt und thermisch mit diesem kontaktiert ist. Die Rohre sind mit den Leitungen 10 fluidtechnisch gekoppelt, sodass bei Betrieb die Kühlflüssigkeit durch die Rohre geleitet wird. Der Kühlerlüfter 8 umfasst ferner einen Lüfterzarge 14, die in einer Fahrtrichtung 16 des Kraftfahrzeugs 2 hinter dem Kühler 12 angeordnet ist. An der Lüfterzarge 14 ist ein Elektromotor 18 befestigt. Bei Betrieb tritt Fahrtwind durch den Kühler 12 hindurch und wird mittels der Lüfterzarge 14 geeignet geformt. Bei einem Stillstand des Kraftfahrzeugs 2 wird mittels des Elektromotors 8 Luft durch den Kühler 12 hindurch gesaugt, sodass der Kühler 12 bei Betrieb im Wesentlichen stets oder zumindest in Abhängigkeit von bestehenden Anforderungen von dem Luftstrom durchsetzt ist. Somit erfolgt eine Abkühlung des Kühlers 12, weswegen auch nach einem vergleichsweise langen Betrieb der Verbrennungsmotors 4 keine Überhitzung des Kühlerlüfters 8 erfolgt. Zudem wird mittels der Lüfterzarge 14 die durch den Kühlerlüfter 8 hindurch tretende Luft auf den Verbrennungsmotor 4 geleitet und dieser auf diese Weise von außen zusätzlich gekühlt.

In Figur 2 ist perspektivisch schematisch vereinfacht in einer Explosionsdarstellung der Kühlerlüfter 8 gezeigt, wobei der Kühler 12 weggelassen ist. An dem Kühler 12 ist die Lüfterzarge 14 befestigt, die das nicht näher dargestellte Kühlernetz vollständig überdeckt und deckungsgleich mit diesem ist. Die Lüfterzarge 14 umfasst einen im Wesentlichen flächig ausgestaltet Zargenkörper 20. Der Zargenkörper 20 weist eine runde Luftdurchlassöffnung 22 auf, die, ebenso wie der Zargenkörper 20, senkrecht zur Fahrtrichtung 16 orientiert ist. Die Luftdurchlassöffnung 22 weist einen Durchmesser von 30 cm auf und ist umfangsseitig von einem Rand 24 umgeben, der hohlzylindrisch ausgestaltet und konzentrisch zur Luftdurchlassöffnung 22 angeordnet ist. Der Durchmesser des Rands 24 ist gleich dem Durchmesser der Luftdurchlassöffnung 22, und der Rand 24 weist in axialer Richtung bezüglich der Luftdurchlassöffnung 22, also parallel zur Fahrtrichtung 16, eine Länge von 2 cm auf. Im Montagezustand befindet sich der Rand 24 auf der dem Kühler 12 abgewandten Seite des Zargenkörpers 20.

Die Lüfterzarge 14 umfasst ferner insgesamt vier baugleiche Befestigungsdome 26, die drehsymmetrisch bezüglich der Luftdurchlassöffnung 22 angeordnet sind. Hierbei geht der Rand 24 in die Befestigungsdome 26 über, deren radial innere Enden 28 zu dem Mittelpunkt ebenfalls 15cm als Abstand 15 aufweisen. Die radial innere Enden 28 sind dabei bezüglich der Luftdurchlassöffnung 22 und deren Mittelpunkt definiert. Die Befestigungsdome 26 erstrecken sich axial bezüglich der Luftdurchlassöffnung 22, also entgegen der Fahrtrichtung 16, von dem Kühler 12 weg. Somit sind die Befestigungsdome 26 senkrecht zu dem Zargenkörper 20 orientiert und verlaufen im Wesentlichen entgegen der Fahrtrichtung 16. An jedem der Befestigungsdome 26 ist jeweils eine Strebe 30 angeformt und somit angebunden, die jeweils einen radialen Verlauf aufweisen und zueinander baugleich sind. Hierbei weisen die Streben 30 zu dem Zargenkörper 20 in Axialrichtung, also parallel zur Fahrtrichtung 16, einen Abstand auf. An dem verbleibenden Freienden der balkenförmig ausgestalteten Streben 30 ist eine Motorhalterung 32 angebunden, die somit oberhalb der Luftdurchlassöffnung 22 angeordnet und konzentrisch zur dieser positioniert ist. Die Motorhalterung 32 ist ringförmig und weist einen Durchmesser von 10 cm auf. Die Motorhalterung 32, die Streben 30, die Befestigungsdome 26, der Rand 24 und der Zargenkörper 20 sind einstückig miteinander in einem Kunststoffspritzgussverfahren hergestellt, beispielsweise aus einem Polyamid (PA).

Im Montagezustand ist mittels der Motorhalterung 32 der Elektromotor 18 gehalten und der Elektromotor 18 somit an dieser befestigt. Hierbei befindet sich der Elektromotor 18 auf der dem Kühler 12 gegenüberliegenden Seite der Lüfterzarge 14. Eine Welle 34 des Elektromotors 18 ragt in der Fahrtrichtung 16 durch die Motorhalterung 32 hindurch und ist an einer Nabe 36 eines Lüfterrads 38 drehfest befestigt. Somit ist das Lüfterrad 38 mittels des Elektromotors 18 angetrieben, der mittels der Motorhalterung 32 gehalten ist. An der Nabe 36 ist eine Anzahl an Lüfterradflügeln 40 angebunden, die umfangsseitig mittels eines Außenrings 42 umgeben und an diesem angebunden sind. Die Nabe 36, die Lüfterradflügel 40 und der Außenring 42 sind einstückig aus einem Kunststoffspritzgussverfahren erstellt.

Im Montagezustand ist das Lüfterrad 38 innerhalb der Luftdurchlassöffnung 22 parallel zu dieser angeordnet, wobei der Außenring 42 radial umfangsseitig mittels des Rands 24 umgeben ist. Bei Betrieb wird mittels des Elektromotors 18 das Lüfterrad 38 rotiert und somit Luft durch die Luftdurchlassöffnung 22 entgegen der Fahrtrichtung 16 gesaugt. Dabei wird in den Luftstrom aufgrund der Rotationsbewegung eine Bewegungskomponente in Axialrichtung, also entgegen der Fahrtrichtung 16 sowie in radialer Richtung bezüglich der Luftdurchlassöffnung 22 eingebracht. Zwischen dem Außenring 42 und dem Rand 24 ist ein Durchströmen von Luft aufgrund einer nicht näher dargestellten Dichtung, beispielsweise einer Labyrinthdichtung, unterbunden.

Zudem umfasst die Lüfterzarge 14 eine Staudruckklappe 44, die eine Öffnung umfasst, die mittels einer Klappe 46 abgedeckt ist. Falls in Fahrtrichtung 16 vor der Lüfterzarge 14 ein vergleichsweise hoher (Luft-)Druck herrscht, insbesondere bei einer vergleichsweise schnellen Bewegung des Kraftfahrzeugs 2, ist aufgrund des Lüfterrad 38 ein Durchtritt der Luft durch die Luftdurchlassöffnung 22 teilweise behindert oder das Lüfterrad 38 müsste vergleichsweise schnell rotiert werden. Dies würde jedoch zu einer erhöhten Belastung des Elektromotors 18 sowie der weiteren Komponente und einer erhöhten Geräuschentwicklung führen. Ab einem bestimmten Druck wird die Klappe 46 daher verschwenkt und die Öffnung freigegeben, sodass durch diese Luft hindurch strömen kann. Somit ist ein Luftdurchsatz durch den Kühler 12, der sich in Fahrtrichtung 16 vor der Lüfterzarge 14 befindet, erhöht. Bei einem vergleichsweise niedrigen Luftdruck vor der Lüfterzarge 14 wie dies bei einem Stillstand des Kraftfahrzeugs 2 der Fall ist, ist die Klappe 46 geschlossen, sodass eine Ausbildung eines lediglich durch die Öffnung der Staudruckklappe 46 und der Luftdurchlassöffnung 22 hindurchtretenden zirkularen Luftstroms unterbunden ist. Somit wird auch stets der Kühler 12 mittels eines ausreichenden Luftstroms durchsetzt.

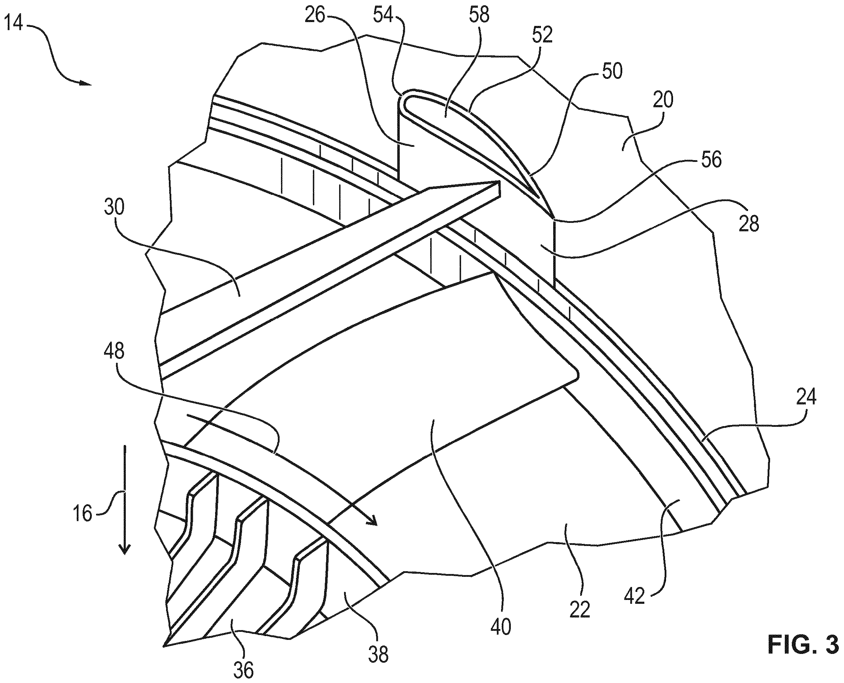

In Figur 3 ist perspektivisch ausschnittsweise die Lüfterzarge 14 gezeigt, wobei die Luftdurchlassöffnung 22 lediglich teilweise dargestellt ist. In der Luftdurchlassöffnung 22 ist das Lüfterrad 38 positioniert, das die topfförmig ausgestaltete Nabe 36 umfasst, deren Öffnung entgegen der Fahrtrichtung 16 orientiert ist. Im Montagezustand liegt zumindest teilweise der Elektromotor 18 innerhalb der Nabe 36 ein, mittels dessen das Lüfterrad 38 in eine Drehrichtung 38 rotiert wird. Hierbei sind die von dem Außenring 42 umgebenen Lüfterradflügel 40 geeignet geformt.

Der Rand 24 geht in das radial innere Ende 28 des einzig gezeigten Befestigungsdoms 26 über, das somit glatt ausgestaltet ist. Der Befestigungsdom 26 weist senkrecht zur Axialrichtung, also senkrecht zur Fahrtrichtung 16 und parallel zu dem Zargenkörper 20, einen tropfenförmigen Querschnitt auf. Folglich weist das radial äußere Ende 50 des Befestigungsdoms 26, das bezüglich der Luftdurchlassöffnung 22 definiert ist, einen variierenden Abstand zu dem Mittelpunkt der Luftdurchlassöffnung 22 auf. Somit umfasst der Befestigungsdom 26 aufgrund des konstanten Abstands des radial inneren Endes 28 zu dem Mittelpunt der Luftdurchlassöffnung 22 eine Verdickung 52. Die Verdickung 52 ist entgegen der Drehrichtung 48 des Lüfterrads 38 versetzt, und das tangentiale und sich dort befindende Ende 54 des Befestigungsdoms 26 ist abgerundet. Mit anderen Worten ist die Position des Endes 54 bezüglich der Luftdurchlassöffnung 22 definiert. Das gegenüberliegende Ende 56, also das tangentiale in Drehrichtung 48 des Lüfterrad 38 versetzte Ende 56 des Befestigungsdoms 26 ist spitz zulaufend, sodass die Tropfenform gebildet ist. Somit weist der Befestigungsdom 26die des tropfenförmigen Querschnitts ein aerodynamisches Profil auf.

Bei Betrieb wird mittels des Lüfterrads 38 Luft entgegen der Fahrtrichtung 16 durch die Luftdurchlassöffnung 22 gesaugt, die somit bezüglich der Luftdurchlassöffnung 22 eine axiale Bewegungskomponente aufweist. Aufgrund der Rotationsbewegung des Lüfterrads 38 wird zudem die Luft in eine Rotation versetzt, und weist folglich eine tangentiale Bewegungskomponente (Drall) auf. Aufgrund der dabei auftretenden Zentrifugalkräfte wird die Luft zu dem in radialer Richtung bezüglich der Luftdurchlassöffnung 22 nach außen bewegt. Dort trifft diese auf die Befestigungsdome 26, wobei die Luft zunächst auf das abgerundete Ende 54 trifft. Aufgrund des aerodynamischen Profils erfolgt eine Ausbildung einer im Wesentlichen anliegenden Strömung, und ein Abriss des Luftstroms an dem Befestigungsdom 26 ist unterbunden, auch wenn der Luftstrom auf den Verbrennungsmotor 4 geleitet wird. Somit ist ein Wirkungsgrad erhöht, und eine benötigte Leistung zum Antrieb des Lüfterrad 38 reduziert. Auch ist eine Geräuschentwicklung verringert.

Zusätzlich sind die Streben 30 bezüglich des Zargenkörpers 20 geneigt und schließen daher auch bezüglich der Fahrtrichtung 16 einen Winkel ein, der von 90° abweicht. Insbesondere ist der Winkel zwischen 40° und 50°. Somit erfolgt mittels der Streben 30 zusätzlich ein Leiten der Luft, und eine effektive Querschnittsfläche für den Luftstrom ist verringert. Insbesondere weist die Strebe 30 in Radialrichtung bezüglich der Luftdurchlassöffnung 22 ebenfalls ein aerodynamisches Profil als Querschnitt auf, was eine Ausbildung von Turbulenzen weiter verringert.

Der Befestigungsdom 26 ist hohl ausgestaltet und weist eine in axialer Richtung, also parallel zur Fahrtrichtung 16, verlaufende Öffnung 58 auf, die sacklochartig ausgestaltet ist. Aufgrund der Öffnung 58 ist ein Gewicht verringert. Auch ist auf diese Weise eine maximale Dicke des Kunststoffs verringert, sodass eine vergleichsweise einfache Fertigung ermöglicht ist, ohne dass eine Verformung des Befestigungsdoms 26 bei einem Aushärten des Kunststoffs und/oder einem Entfernen aus einer Gussform zu erwarten ist.

Zusammenfassend ist die Anbindung der Streben 30 an dem Zargenkörper 20, nämlich die Befestigungsdome 26, in Axialrichtung, also parallel zur Fahrtrichtung 16, als ein aufgefädeltes Strömungsprofil ausgestaltet, dessen Anströmseite der Lüfterdrehrichtung, also der Drehrichtung 48, entgegensteht. Mit anderen Worten ist das bezüglich der Luftdurchlassöffnung 22 tangentiale und entgegen der Drehrichtung 48 des Lüfterrad 38 versetzte Ende 54 des Befestigungsdoms 26 abgerundet, und der Befestigungsdom 26 weist die Verdickung 52 auf, die entgegen der Drehrichtung 58 des Lüfterrad 38 versetzt ist. Somit ist ein geringerer Strömungswiderstand für die mit Umfangskomponenten austretende Luft realisiert. Auch treten weniger Strömungsablösung in diesem Bereich auf, also weniger Strömungsabrisse.

Beispielsweise ist der Querschnitt des Befestigungsdoms 26 konstant oder verringert sich entgegen der Fahrtrichtung 16 mit zunehmendem Abstand zu dem Zargenkörper 20. Mit anderen Worten ist der Befestigungsdom 26 skaliert und mit einer Schrägung ausgestaltet. Alternativ oder in Kombination hierzu ist der Befestigungsdom 26 ein Hohlkörper und somit hohl. Auf diese Weise ist insbesondere eine Fertigung mit einem einseitigen Kern in einem Spritzgussverfahren ermöglicht. Insbesondere weist das Spritz-Gies-Werkzeug lediglich einen einseitigen Kern auf. Somit können Öffnungen in dem Werkzeug im Bereich zwischen dem Zargenkörper 20 und der Luftdurchlassöffnung 22 entfallen. Auch ist es möglich, je nach Profilausführung des Befestigungsdoms 26, Einfluss auf die Steifigkeit zu nehmen.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebene Einzelmerkmale auch auf andere Weise miteinander kombinierbar, ohne den Gegenstand der Erfindung zu verlassen.

### Bezugszeichenliste

- 2: Kraftfahrzeug
- 4: Verbrennungsmotor
- 6: Rad
- 8: Kühlerlüfter
- 10: Leitung
- 12: Kühler
- 14: Lüfterzarge
- 16: Fahrtrichtung
- 18: Elektromotor
- 20: Zargenkörper
- 22: Luftdurchlassöffnung
- 24: Rand
- 26: Befestigungsdom
- 28: radial inneres Ende
- 30: Strebe
- 32: Motorhalterung
- 34: Welle
- 36: Nabe
- 38: Lüfterrad
- 40: Lüfterradflügel
- 42: Außenring
- 44: Staudruckklappe
- 46: Klappe
- 48: Drehrichtung
- 50: radial äußeres Ende
- 52: Verdickung
- 54: Ende
- 56: Ende
- 58: Öffnung

## Patentansprüche

1. Lüfterzarge (14) eines Kraftfahrzeugs (2), mit einem Zargenkörper (20), der eine runde Luftdurchlassöffnung (22) für ein Lüfterrad (38) aufweist, und mit einer Motorhalterung (32), die oberhalb der Luftdurchlassöffnung (22) angeordnet und mittels einer Strebe (30) an einem Befestigungsdom (26) angebunden ist, der an dem Zargenkörper (20) angebunden und zumindest teilweise senkrecht zu diesem orientiert ist, wobei das bezüglich der Luftdurchlassöffnung (22) radiale äußere Ende (50) des Befestigungsdoms (26) einen variierenden Abstand zu dem Mittelpunkt der Luftdurchlassöffnung (22) aufweist, **dadurch gekennzeichnet, dass** der Querschnitt des Befestigungsdoms (26) parallel zu dem Zargenkörper (20) tropfenförmig ist.

2. Lüfterzarge (14) nach Anspruch 1,
**dadurch gekennzeichnet,**
**dass** das bezüglich der Luftdurchlassöffnung (22) radiale innere Ende (28) des Befestigungsdoms (26) einen konstanten Abstand zu dem Mittelpunkt der Luftdurchlassöffnung (22) aufweist.

3. Lüfterzarge (14) nach Anspruch 1 oder 2,
**dadurch gekennzeichnet,**
**dass** der Befestigungsdom (26) eine Verdickung (52) aufweist, die entgegen der Drehrichtung (48) des Lüfterrads (38) versetzt ist.

4. Lüfterzarge (14) nach einem der Ansprüche 1 bis 3,
**dadurch gekennzeichnet,**
**dass** das bezüglich der Luftdurchlassöffnung (22) tangentiale und entgegen der Drehrichtung (48) des Lüfterrads (38) versetzte Ende (54) des Befestigungsdoms (26) abgerundet ist.

5. Lüfterzarge (14) nach einem der Ansprüche 1 bis 4,
**dadurch gekennzeichnet,**
**dass** der Befestigungsdom (26) hohl ist.

6. Lüfterzarge (14) nach einem der Ansprüche 1 bis 5,
**dadurch gekennzeichnet,**
**dass** an dem Zargenkörper (20) ein Rand (24) angebunden ist, der die Luftdurchlassöffnung (22) umfangsseitig umgibt, und der in den Befestigungsdom (26) übergeht.

7. Lüfterzarge (14) nach einem der Ansprüche 1 bis 6,
**dadurch gekennzeichnet,**
**dass** die Strebe (30) bezüglich der Luftdurchlassöffnung (22) radial verläuft.

8. Lüfterzarge (14) nach einem der Ansprüche 1 bis 7,
**dadurch gekennzeichnet,**
**dass** die Strebe (30) bezüglich des Zargenkörpers (20) geneigt ist.

9. Lüfterzarge (14) nach einem der Ansprüche 1 bis 8,
**gekennzeichnet durch**
weitere Streben (30) und Befestigungsdome (26), insbesondere zwischen 2 und 14, die baugleich zu der Strebe (30) und dem Befestigungsdom (26) sind.

10. Kühlerlüfter (8) eines Kraftfahrzeugs (2), insbesondere Hauptlüfter, mit einem Kühler (12), an dem eine Lüfterzarge (14) nach einem der Ansprüche 1 bis 9 angebunden ist.

11. Kühlerlüfter (8) nach Anspruch 10,
**gekennzeichnet durch**
einen Elektromotor (18), der mittels der Motorhalterung (23) gehalten ist, und mittels dessen ein Lüfterrad (38) angetrieben ist, das in der Luftdurchlassöffnung (22) angeordnet ist.

## Claims

1. Fan shroud (14) of a motor vehicle (2), with a shroud body (20), which has a round air flow opening (22) for a fan wheel (38), and with a motor mount (32), which is arranged above the air flow opening (22) and is attached to a fastening dome (26) by means of a strut (30), said fastening dome (26) being attached to the shroud body (20) and being oriented at least partially perpendicular thereto, wherein the radially outer end (50) of the fastening dome (26) with respect to the air flow opening (22) is at a varying distance from the center of the air flow opening (22),
**characterized in**
**that** the cross-section of the fastening dome (26) parallel to the shroud body (20) is drop-shaped.

2. Fan shroud (14) according to claim 1,
**characterized in**
**that** the radially inner end (28) of the fastening dome (26) with respect to the air flow opening (22) is at a constant distance from the midpoint of the air flow opening (22).

3. Fan shroud (14) according to claim 1 or 2,
**characterized in**
**that** the fastening dome (26) has a thickening (52), which is offset opposite to the direction of rotation (48) of the fan wheel (38).

4. Fan shroud (14) according to one of claims 1 to 3,
**characterized in**
**that** the end (54) of the fastening dome (26), which is tangential with respect to the air flow opening (22) and is offset opposite to the direction of rotation (48) of the fan wheel (38), is rounded.

5. Fan shroud (14) according to one of claims 1 to 4,
**characterized in**
**that** the fastening dome (26) is hollow.

6. Fan shroud (14) according to one of claims 1 to 5,
**characterized in**
**that** an edge (24) surrounding the air flow opening (22) circumferentially and merging into the fastening dome (26) is attached to the shroud body (20).

7. Fan shroud (14) according to one of claims 1 to 6,
**characterized in**
**that** the strut (30) extends radially with respect to the air flow opening (22).

8. Fan shroud (14) according to one of claims 1 to 7,
**characterized in**
**that** the strut (30) is inclined with respect to the shroud body (20).

9. Fan shroud (14) according to one of claims 1 to 8,
**characterized by**
further struts (30) and fastening domes (26), in particular between 2 and 14, which are identical in construction to the strut (30) and the fastening dome (26).

10. Radiator fan (8) of a motor vehicle (2), in particular main fan, with a radiator (12), to which a fan shroud (14) according to one of claims 1 to 9 is attached.

11. Radiator fan (8) according to claim 10,
**characterized by**
an electric motor (18), which is supported by means of the motor support (23) and by means of which a fan wheel (38) arranged in the air flow opening (22) is driven.

## Revendications

1. Carénage de ventilateur (14) d'un véhicule automobile (2), avec un corps de carénage (20), qui comprend une ouverture de passage d'air (22) pour une roue de ventilateur (38), et avec un support de moteur (32), qui est disposé au-dessus de l'ouverture de passage d'air (22) et qui est relié à un dôme de fixation (26) au moyen d'une entretoise (30), ledit dôme de fixation (26) étant fixé au corps de carénage (20) et étant orienté au moins partiellement perpendiculairement à celui-ci, dans lequel l'extrémité extérieure (50) du dôme de fixation (26) radiale par rapport à l'ouverture de passage d'air (22) est à une distance variable du centre de l'ouverture de passage d'air (22),
**caractérisé en ce**
**que** la section transversale du dôme de fixation (26) parallèle au corps de carénage (20) est en forme de goutte.

2. Carénage de ventilateur (14) selon la revendication 1,
**caractérisé en ce**
**que** l'extrémité radialement intérieure (28) du dôme de fixation (26) par rapport à l'ouverture de passage d'air (22) est à une distance constante par rapport au centre de l'ouverture de passage d'air (22).

3. Carénage de ventilateur (14) selon la revendication 1 ou 2,
**caractérisé en ce**
**que** le dôme de fixation (26) comprend un épaississement (52), qui est décalé dans le sens opposé au sens de rotation (48) de la roue de ventilateur (38).

4. Carénage de ventilateur (14) selon l'une des revendications 1 à 3,
**caractérisé en ce**
**que** l'extrémité (54) du dôme de fixation (26), tangente par rapport à l'ouverture de passage d'air (22) et décalée dans le sens opposé au sens de rotation (48) de la roue de ventilateur (38), est arrondie.

5. Carénage de ventilateur (14) selon l'une des revendications 1 à 4,
**caractérisé en ce**
**que** le dôme de fixation (26) est creux.

6. Carénage de ventilateur (14) selon l'une des revendications 1 à 5,
**caractérisé en ce**
**qu'**un bord (24) entourant l'ouverture de passage d'air (22) sur sa périphérie et se fondant dans le dôme de fixation (26) est relié au corps de carénage (20).

7. Carénage de ventilateur (14) selon l'une des revendications 1 à 6,
**caractérisé en ce**
**que** l'entretoise (30) s'étend radialement par rapport à l'ouverture de passage d'air (22).

8. Carénage de ventilateur (14) selon l'une des revendications 1 à 7,
**caractérisé en ce**
**que** l'entretoise (30) est inclinée par rapport au corps de carénage (20).

9. Carénage de ventilateur (14) selon l'une des revendications 1 à 8,
**caractérisé par**
d'autres entretoises (30) et dômes de fixation (26), notamment entre 2 et 14, qui sont de construction identique à l'entretoise (30) et au dôme de fixation (26).

10. Ventilateur de radiateur (8) d'un véhicule automobile (2), notamment ventilateur principal, avec un radiateur (12), auquel est relié un carénage de ventilateur (14) selon l'une des revendications 1 à 9.

11. Ventilateur de radiateur (8) selon la revendication 10,
**caractérisé par**
un moteur électrique (18), qui est maintenu au moyen du support de moteur (23) et au moyen duquel une roue de ventilateur (38) disposée dans l'ouverture de passage d'air (22) est entraînée.
